# EUROPEAN PATENT APPLICATION

(11) **EP 4 525 449 A1**
(43) Date of publication of application: **19.03.2025**
(21) Application number: 23196745.6
(22) Date of filing: 12.09.2023
(51) Int. Cl.: H04N 21/218, H04N 21/41, H04N 21/414, H04N 21/4788, H04N 21/482

(54) **A METHOD, AN APPLICATION, A DEVICE AND A SYSTEM FOR PROCESSING AND PRESENTING STREAMS OF A SENSORY SIGNAL**

(71) Applicant: JoVision UG (haftungsbeschränkt), 22083 Hamburg (DE)
(72) Inventor: Al-Shdaifat, Islam, 22083 Hamburg (DE); Al-Shyoukh, Moath, 22083 Hamburg (DE); Al Shdaifat, Mustafa, 22083 Hamburg (DE); Al Shudaifat, Ahmed, 22083 Hamburg (DE)
(74) Representative: RGTH

(57) **Abstract**

The present invention relates to a method for processing and presenting streams of a sensory signal, and an application, a device and a system implementing the method. The present invention aims to enhance the experience of a person viewing a captured event, and to allow and encourage the person viewing the captured event remotely to join the event physically, breaking the problem that modern technology increasing the disconnection in human society.

## Description

### Field of the invention

Boradly stated, the invention relates to a method for processing and presenting event-related streams of a sensory signal. The invention also extends to an application, a device and a system implementing the method.

### State of the art

The concept of obtaining streams of a sensory signal of an event and displaying them either live or on-demand is known.

In the traditional approach of broadcasting, an organised event, such as a football match, is usually officially captured by the event organiser and/or broadcasting companies, involving professional staff using professional devices (e.g., camera operators using cameras). A person not attending the event venue can either watch or listen to the event remotely on television or radio (hereafter audience). However, taking broadcasting on television as an example, the audience cannot select the views of the event shown on the television, and the views on the television are firstly limited by the locations where the cameras are arranged in the event venue by the event organiser and/or broadcasting companies, and secondly limited to those selected by the event organiser and/or broadcasting companies for the purpose of broadcasting. The same limitations apply *mutatis mutandis* to radio broadcasting.

With the development of the internet and instant online video sharing platforms, it is also known to capture organised as well as unorganised event by viewers of the event (hereafter witness) with their mobile devices (e.g., mobile phones), wherein the witness is not necessarily a professional camera operator. The captured event is then usually uploaded to online video sharing platforms. A user of the online video sharing platforms (hereafter user) who is not at the event venue can then access the captured event and watch or listen to it either live or on-demand. In such a case, the captured views or segments of voice recording available to the user are decided by the witness. Taking capturing a video as an example, the user has no choice as to the location and capturing angle of the witness. Moreover, whether a witness would start recording, and/or how many witnesses would start recording the event are only spontaneously. It is therefore further hard to ensure that the event is recorded in the best possible manner which shows all details clearly.

Namly, in both known approaches, the person viewing the captured/obtained event cannot affect the quality of the captured/obtained event. Furthermore, the two known approaches both provide conveniences for people to view the event in remote locations, possibly discouraging real-life interactions.

### Summary of the invention

The present invention aims to solve at least one of the above problems.

The present invention therefore provides a method for processing and presenting streams of a sensory signal, wherein the method comprising the following steps:
a) obtaining streams of a sensory signal of an event by devices located in an event observing venue within at least a part of an event period;
b) acquiring a corresponding characterising information of each of the streams of a sensory signal by a corresponding device located in the event observing venue within at least a part of the event period that obtained each of the streams of a sensory signal,
   wherein the characterising information comprising at least one of the following:
   - a location of the corresponding device when obtaining each of the streams of a sensory signal,
   - an orientation of the corresponding device when obtaining each of the streams of a sensory signal,
   - a starting timestamp of each of the streams of a sensory signal, and
   - an ending timestamp of each of the streams of a sensory signal;
c) uploading and storing each of the streams of a sensory signal and the characterising information of each of the streams of a sensory signal to a central unit by each of the corresponding device through a network;
d) acquiring streams of a sensory signal of the event and the corresponding characterising information of each of the streams of a sensory signal from the central unit by at least one device through the network; and
e) presenting the acquired streams of a sensory signal to a user by the at least one device based on the corresponding characterising information of each of the streams of a sensory signal;

wherein the at least one device in steps d) and e) is a device located in the event observing venue within at least a part of the event period and/or a device not located in the event observing venue; and
wherein the devices located in the event observing venue within at least a part of the event period and the devices not located in the event observing venue are synchronized.

It can be understood that a stream of a sensory signal refers to any type of signal that is perceptible by at least one sense of a human. For example, it can be an image, a video, an audio recording, a combination of at least two of the above, and so on. When referring to streams of a sensory signal, each one of the streams of a sensory signal can be a different type of signal comparing to any one of the other streams of a sensory signal.

It can be understood that devices can be categorised into two groups, wherein the first group of the devices being located in the event observing venue within at least a part of the event period (hereafter Group-I devices), and the second group of the devices being devices not located in the event observing venue (hereafter Group-II devices). A Group-I device can become a Group-II device over time, and vice versa. Exemplary, the devices in the step a) are Group-I devices, at least when implementing the step a), and could optionally become Group-II devices later, such as when implementing the steps b) to e).

It can be understood that an event refers to a public or a private event, which can be an organised event, a natural event, an accident, and so on; an event observing venue refers to a collection of locations where the event can be viewed; and an event period refers to the total period of the occurrence of the event. Therefore, devices located in the event observing venue within at least a part of the event period have the potential to capture streams of a sensory signal of the event.

It can be understood that a user refers to an entity using a Group-I or Group-II device. For example, the entity is a natural person.

It can be understood that in the step b) acquiring a corresponding characterising information of each of the streams of a sensory signal by a corresponding device located in the event observing venue within at least a part of the event period that obtained each of the streams of a sensory signal, a corresponding device refers to a device that has obtained a specific stream of a sensory signal of the event, and therefore the specific stream of a sensory signal corresponds to the corresponding device. The corresponding device was a Group-I device when obtaining the specific stream of a sensory signal, but it can become a Group-II device afterwards. It could be that only one stream of a sensory signal is obtained by the corresponding device, or multiple streams of a sensory signal are obtained by the corresponding device.

It can also be understood that an orientation of a corresponding device when obtaining a stream of a sensory signal refers to an angle from which the stream of a sensory signal is obtained by the corresponding device. For example, a voice recording can be obtained from the front or back of a speaking person by the corresponding device, and an image or video can be obtained from the front or back of a celebrity by the corresponding device. Exemplary, the orientation can be defined by cardinal directions (north, south, east and west) basing on a physical centre of the event observing venue, such as the middle of a football pitch; or basing on a centre of attention, which can vary with time, such as a player that is running towards a goalpost on a football pitch, or a dog licking an ice cream on a street.

It can further be understood that a starting timestamp of each of the streams of a sensory signal is the time when the corresponding device starts obtaining each of the streams of a sensory signal, and an ending timestamp of each of the streams of a sensory signal is the time when the corresponding device stops obtaining each of the streams of a sensory signal.

It can be understood that characterising information of each of the streams of a sensory signal can further comprise other information, such as a brand of the corresponding device (e.g., Samsung, Sony, iPhone etc.), a model of the corresponding device (e.g., iPhone 5, iPhone 13, Sony Xperia 1V etc.), a user information of the corresponding device (e.g., a professional photographer, a professional camera operator or an amateur photographer etc.), and so on.

It can be understood that more information of each of the streams of a sensory signal can be calculated from their characterising information. For example, a total length of each of the streams of a sensory signal can be calculated from the starting timestamp and the ending timestamp.

It can be understood that in the step d) acquiring streams of a sensory signal of the event and the corresponding characterising information of each of the streams of a sensory signal from the central unit by at least one device through the network, and in the step e) presenting the acquired streams of a sensory signals to a user by the at least one device based on the corresponding characterising information of each of the streams of a sensory signal, the at least one device can be a Group-I and/or a Group-II device. Namely, it is not necessary that the at least one device referred to in the steps d) and e) being located in the event observing venue within at least a part of the event period. The at least one device referred to in the step d) can be not located in the event observing venue, at least when implementing the steps d) and/or e).

It can be understood that in the step d) acquiring streams of a sensory signal of the event and the corresponding characterising information of each of the streams of a sensory signal from the central unit by at least one device through the network, the number of streams of a sensory signal acquired by the at least one device can range from one to all of the streams of a sensory signal of the event.

It can be understood that the steps b) to e) can be implemented during the event period or any time after the event period. Preferably, the steps b) and c) are implemented during the event period, while the steps d) and e) are implemented during the event period and further implemented any time after the event period.

It can be understood that devices (Group-I and Group-II devices) are synchronised in real time using an available time server for synchronization, such as Google Public NTP (Network Time Protocol).

In an embodiment of the present invention, wherein in the step a) obtaining streams of a sensory signal of an event by devices located in an event observing venue within at least a part of an event period, at least two Group-I devices each obtains at least one stream of a sensory signal.

In the above embodiment of the present invention, wherein preferably, each of the at least two Group-I devices comprises a signal obtaining means for obtaining at least one stream of a sensory signal.

In the above embodiment of the present invention, preferably, the characterising information in the step b) acquiring a corresponding characterising information of each of the streams of a sensory signal by a corresponding device that obtained each of the streams of a sensory signal further comprise a type of the signal obtaining means of the corresponding device (e.g., a camera on a mobile phone).

In an embodiment of the present invention, the step a) obtaining streams of a sensory signal of an event by devices located in an event observing venue within at least a part of an event period further comprise the following step(s): downloading at least one stream of a sensory signal of the event from a central unit by at least one Group-I device; and/or receiving, by at least one Group-I device, at least one stream of a sensory signal of the event from another Group-I device.

In an embodiment of the present invention, the step b) acquiring a corresponding characterising information of each of the streams of a sensory signal by a corresponding device located in the event observing venue within at least a part of the event period that obtained each of the streams of a sensory signal comprises the following step(s): obtaining at least one of the characterising information by an application installed in a storage of the corresponding device; and/or obtaining at least one of the characterising information from a user input through a GUI means of the corresponding device.

In the above embodiment of the present invention, preferably, the step b) acquiring a corresponding characterising information of each of the streams of a sensory signal by a corresponding device located in the event observing venue within at least a part of the event period that obtained each of the streams of a sensory signal comprises the following step: acquiring, by the application installed in the storage of the corresponding device, a location and/or orientation of the corresponding device when obtaining a stream of a sensory signal as detected by at least a sensor of the corresponding device. It can be understood that the at least one sensor of the corresponding device can be a GPS sensor, a gyroscope, a Bluetooth, a NDF sensor, and so on. In order to improve the accuracy of the location and/or orientation, preferably, more than one sensor in the corresponding device is used, and more preferably, all the sensors in the corresponding device are used.

In an embodiment of the present invention, wherein after the step b) acquiring a corresponding characterising information of each of the streams of a sensory signal by a corresponding device located in the event observing venue within at least a part of the event period that obtained each of the streams of a sensory signal, the method further comprises the following step(s): pushing a notification to start obtaining at least one stream of a sensory signal of the event on at least one device located in the event observing venue within at least a part of the event period by an application installed in a storage of the at least one device located in the event observing venue within at least a part of the event period through the network, wherein the at least one device located in the event observing venue within at least a part of the event period has not yet started to obtain at least one stream of a sensory signal of the event; and/or pushing a notification to travel to the event observing venue on at least one device not located in the event observing venue by the application installed in the storage of the at least one device not located in the event observing venue through the network.

It can be understood that, according to the above embodiment, at least one Group-I device that, at the moment of implementing the step b), has not yet started to obtain at least one stream of a sensory signal of the event, will be prompted to do so with a notification pushed on the at least one Group-I device by the application installed in the storage of the at least one Group-I device. Therefore, more devices can join the process of obtaining streams of a sensory signal of the event, increasing the number of streams of a sensory signal of the event, and providing a higher possibility that the event can be recorded in a manner that details are shown clearly (e.g., from as much as possible different locations, orientations, timestamps).

It can also be understood that, according to the above embodiment, at least one Group-II device that, at the moment of implementing the step b), is not located in the event observing venue, will be prompted to travel to the event observing venue, such that the at least one Group-II device can become a Group-I device and start obtaining or be prompt to start obtaining at least one stream of a sensory signal. Therefore, more devices can join the process of obtaining streams of a sensory signal of the event, increasing the number of streams of a sensory signal of the event, and providing a higher possibility that the event can be recorded in a manner that details are shown clearly (e.g., from as much as possible different locations, orientations, timestamps).

It can be understood that, in the above embodiment of the present invention, a notification can be pushed by the application installed in the storage of the at least one Group-I and/or Group-II device automatically, or a notification is pushed by the application installed in the storage of the at least one Group-I and/or Group-II device upon receiving at least a notification of the event sent by at least one of the other Group-I and/or Group-II device through the network. Explanatory, a notification of the event sent by at least one of the other Group-I devices can be an invitation to the event.

It can be understood that without prejudice to the steps c) and d), after the step b) acquiring a corresponding characterising information of each of the streams of a sensory signal by a corresponding device located in the event observing venue within at least a part of the event period that obtained each of the streams of a sensory signal, the method of the present invention can also comprise the following step: transmitting at least one of the streams of a sensory signal from a Group-I device to at least one of the other device, which can be a Group-I and/or a Group-II device. The transmitting of at least one of the streams of a sensory signal can be with or without payment.

In an embodiment of the present invention, wherein in the step c) uploading and storing each of the streams of a sensory signal and the characterising information of each of the streams of a sensory signal to a central unit by each of the corresponding device through a network, each of the streams of a sensory signal and the characterising information of each of the streams of a sensory signal are stored in a corresponding relationship such that they can be acquired together.

In an embodiment of the present invention, the step c) uploading and storing each of the streams of a sensory signal and the characterising information of each of the streams of a sensory signal to a central unit by each of the corresponding device through a network comprises the following steps: analysing each of the streams of a sensory signal by the central unit, recognising a common parameter between at least two of the streams of a sensory signal by the central unit, and correcting at least one of the characterising information of one of the at least two of the streams of a sensory signal by the central unit. It can be understood that, a common parameter can be a same object shown in different videos, a voice segment where the same voice is speaking the same sentence in different voice recordings, and so on. Therefore, for example, when it is recognised that two streams of a sensory signal (A and B) obtained by two Group-I devices have a common parameter, the characterising information of A and B such as the location and/or orientation of the corresponding Group-I device when obtaining the stream of a sensory signal A as determined by at least one sensor of this corresponding Group-I device, can be corrected based on the location and/or orientation of the other corresponding Group-I device when obtaining the stream of a sensory signal B, as determined by at least one sensor of the other corresponding Group-I device.

In an embodiment of the present invention, wherein the step d) acquiring streams of a sensory signal of the event and the characterising information of each of the streams of a sensory signal from the central unit by at least one device through the network comprises the following steps: d1) receiving, by the application installed in the storage of each of the at least one device, a zero command to acquire streams of a sensory signal of the event from the user via a GUI means of each of the at least one device; and d2) acquiring streams of a sensory signal of the event and the corresponding characterising information of each of the streams of a sensory signal from the central unit by the application installed in the storage of each of the at least one device. It can be understood that, according to the above embodiment, the at least one device in the steps d1) and d2) refers to a Group-I or a Group-II device; and the steps d1) and d2) can be implemented during the event period or any time after the event period.

In an embodiment of the present invention, in addition to or as a replacement of the steps d1) and d2), the step d) can comprise: automatically acquiring streams of a sensory signal of the event and the characterising information of each of the streams of a sensory signal by the application installed in the storage of the at least one device, when the at least one device meets at least a predefined requirement. For example, the at least one predefined requirement can be that the at least one device is located in the event observing venue (Group-I device) or next to the event observing venue (Group-II device), and/or the at least one device (Group-I and/or Group-II device) used to obtain streams of a sensory signal of a similar event to the event at hand.

In an embodiment of the present invention, wherein the step e) presenting the acquired streams of a sensory signal to a user by the at least one device based on the corresponding characterising information of each of the streams of a sensory signal comprises the following steps: e1) generating, by the application installed in the storage of each of the at least one device, at least a display of the acquired streams of a sensory signal of the event according to the at least one of the characterising information, and displaying the display on a GUI means of each of the at least one device; e2) receiving, by the application installed in the storage of each of the at least one device, a first command from the user via the GUI means of each of the at least one device, wherein the first command comprises at least one stream of sensory signal to be played chosen from the display, and when a number of streams of a sensory signal to be played is more than one, a playing sequence of the streams of a sensory signal to be played; e3) generating, by the application installed in the storage of each of the at least one device, a plan of playing the streams of a sensory signal to be played according to the first command; and e4) playing the plan by the application installed in the storage of each of the at least one device on the GUI means of each of the at least one of device.

Preferably, in the above embodiment of the present invention, when the number of streams of a sensory signal to be played is more than one, the plan generated according to the first command in the step e3) plays the streams of a sensory signal to be played without a gap. Namely, the latter stream of a sensory signal in the sequence of the streams of a sensory signal to be played is played immediately when the former stream of a sensory signal is ended.

In the above embodiment of the present invention, a display can be understood as a format, sequence and/or order of displaying the acquired streams of a sensory signal. It can be further understood that, in the step e1), firstly, the characterising information can be taken as topic(s) for generating a display. For example, the starting timestamps of the acquired streams of a sensory signal can be used as the topic, and the display can be generated accordingly to display the acquired streams of a sensory signal in chronological order or reverse chronological order. It is also possible to take at least two of the characterising information as the topics, hence generating a display according to a combination of the at least two of the characterising information, such as a combination of the locations and orientations of the corresponding Group-I devices when obtaining each of the streams of a sensory signal. Besides, other information calculated from the characterising information, or a combination of the other information and characterising information can also be used as the topic(s), hence generating a display accordingly. Secondly, except for being taken as topic(s), the characterising information of the acquired streams of a sensory signal can be used as filter(s) for generating a display. Exemplary, a display can be generated only with acquired streams of a sensory signal having starting timestamps that are 10 minutes before an end of the event, or a display can be generated with acquired streams of a sensory signal having all other locations exception for locations directly behind the goalpost.

It can also be understood that, the first command in the step e2) can further comprises a repeating time of playing the at least one stream of a sensory signal to be played (e.g., repeating for 2 times, playing in loop etc.), a playing speed of playing the at least one stream of a sensory signal to be played (e.g., 0,1x speed, 0.5x speed, 1x speed, 1.5x speed, 2x speed etc.), a volume of playing the at least one stream of a sensory signal to be played (e.g., being represented as a bar scaling from 0 to 100 volume), and so on.

In an embodiment of the present invention, the step e) presenting the acquired streams of a sensory signal to a user by the at least one device based on the corresponding characterising information of each of the streams of a sensory signal comprises the following steps: automatically choosing, by the application installed in the storage of each of the at least one device, at least one stream of a sensory signal to be played from the acquired streams of a sensory signal; automatically generating, by the application installed in the storage of each of the at least one device, a plan of playing the at least one stream of a sensory signal to be played; and automatically playing, by the application installed in the storage of each of the at least one device, the plan on the GUI means of each of the at least one device.

Preferably, in the above embodiment of the present invention, when the number of streams of a sensory signal to be played is more than one, the automatically generated plan plays the streams of a sensory signal to be played without a gap. Namely, the latter stream of a sensory signal in the sequence of the streams of a sensory signal to be played is played immediately when the former stream of a sensory signal is ended.

It can be understood that, according to the above embodiment of the present invention, the above steps can be implemented before and/or after the steps e1) to e4), or after the step e1) and before the step e2), or after the step e1) and replacing the steps e2) to e4), or replacing the steps e1) to e4), and so on.

It can be understood that, according to the above embodiment of the present invention, the automatic choosing of at least one streams of a sensory signal to be played and the automatic generating of a plan can be implemented in a random manner by the application installed in the storage of the at least one device (Group I and/or Group-II device); and/or implemented by learning a previous plan generating according to a first command as in the step e3); and/or implemented by learning a previous plan automatically generated by the application installed in the storage of the at least one device. It can be further understood that, the automatic choosing of at least one streams of a sensory signal to be played and the automatic generating of a plan can be implemented according to a set of predefined rules in the storage of the at least one device, and the set of predefined rules can comprise rules to identify the important centres of attention. For example, the rules to identify the important centres of attention can identify whether a number of the acquired streams of a sensory signal containing the same object exceeds a predefined number, and if yes, then it is likely that the same object is one of the important centres of attention of the event. Another example, the rules to identify the important centres of attention can identify whether a number of the acquired streams of a sensory signal having the same orientation during the same part of the event period for a length of time longer than a predefined value, and when the number exceeds a predefined number, then it is likely that there is an important centre of attention of the event in the orientation during the part of the event period.

In an embodiment of the present invention, the steps e2) and e3) can be replaced by the following steps: receiving, by the application installed in the storage of each of the at least one device (Group-I or a Group-II device), a plan from another device (Group-I or a Group-II device) through the network; or downloading, by the application installed in the storage of each of the at least one device (Group-I or a Group-II device), a plan from the central unit through the network.

In an embodiment of the present invention, the method further comprises the following steps: f1) receiving a second command from the user via the GUI means of each of the at least one device, wherein the second command implementing at least an adjustment to the plan by the application installed in the storage of each of the at least one device; f2) generating an adjusted plan by adjusting the plan according to the second command by the application installed in the storage of each of the at least one device; and f3) playing the adjusted plan by the application installed in the storage of each of the at least one device on the GUI means of each of the at least one device.

It can be understood that, in the above embodiment of the present invention, the second command in the step f1) can implement at least an adjustment to a plan generated according to the first command, and/or a plan automatically generated by the application installed in the storage of each of the at least one device, and/or a plan received from another device through the network, and/or a plan downloaded from the central unit through the network. The second command can comprise an adjustment as to the repeating time, playing speed, playing volume, and playing sequence and so on. The second command can also comprise an adjustment which is stop playing, replay from the beginning, and so on.

Preferably, in the above embodiment of the present invention, when the second command is received during the step e4) playing the plan by the application installed in the storage of each of the at least one device on the GUI means of each of the at least one device, the plan is continued to be played on the GUI means of each of the at least one device by the application installed in the storage of each of the at least one device, until the step f2) is finished and the adjusted plan is generated. It can be understood that, in this manner, the streams of a sensory signal can be played without a gap, even when the plan of playing the streams of sensory signals needs to be adjusted upon receiving the second command.

In an embodiment of the present invention, the method further comprises the following step: uploading and storing the plan to the central unit by the at least one device through the network for devices to acquire; or sending the plan to another device by the at least one device through the network. It can be understood that, the sending the plan to another device by the at least one device through the network can be implemented with or without payment from the another device to the at least one device. And it can be understood that, devices that can acquire a stored plan from the central unit are Group-I and/or Group-II devices, and devices that can receive a plan from the at least one device are Group-I and/or Group-II devices.

In an embodiment of the present invention, wherein in the step e1) generating, by the application installed in the storage of each of the at least one device, at least a display of the acquired streams of a sensory signal of the event according to the at least one of the characterising information, and displaying the display on the GUI means of each of the at least one device, when the display of the acquired streams of a sensory signal of the event is generated according to at least the locations of the corresponding devices when obtaining each of the streams of a sensory signal, the display comprises a scheme of the event observing venue, and a visual representation of at least one of the locations of the corresponding devices when obtaining each of the streams of a sensory signal on the scheme of the event observing venue.

It can be understood that, according to the above embodiment, for example, when the event is a football match and the event observing venue is a football pitch, the display comprises a scheme (e.g., a map) of the football pitch, preferably showing regions e.g., according to seat numbers for the spectators, and at least one of the locations of the corresponding devices when obtaining each of the streams of a sensory signal are shown as icon(s) on the scheme/map of the football pitch. Therefore, a user of the at least one device acquiring the streams of a sensory signal of the event, can quickly spot where each of the streams of a sensory signal was obtained, and can therefore locate on at least one stream of a sensory signal that the user is interested in with more ease.

In an embodiment of the present invention, wherein the method further comprises the following steps: receiving a third command from a user of a device located in the event observing venue within at least a part of the event period via the GUI means of the device located in the event observing venue within at least a part of the event period; and transferring, by the application installed in the storage of the device located in the event observing venue within at least a part of the event period, a right of a location in the event observing venue from the device in the event observing venue within at least a part of the event period to another device in the event observing venue within at least a part of the event period.

It can be understood that, in the above embodiment of the present invention, a right of a location in the event observing venue refers to the right of obtaining at least one stream of a sensory signal for the purpose of the present invention from the location in the event observing venue. Initially, a right of a location in the event observing venue can be automatically allocated to a device in the event observing venue within at least a part of the event period that firstly obtains at least one stream of a sensory signal of the event; or initially, a right of a location in the event observing venue is bought by a user of a device in the event observing venue within at least a part of the event period with payment. The right of the location in the event observing venue can be transferred from the device initially having the right of the location to another device in the event observing venue within at least a part of the event period, with or without payment from the another device to the device initially having the right. And subsequently, the right of a location in the event observing venue can further transferred between devices with or without payment.

In an embodiment of the present invention, wherein the method further comprises the following step: pushing a notification to start acquiring at least one stream of sensory signal of the event on at least one of the devices located in the event observing venue within at least a part of the event period and/or not located in the event observing venue through the network.

It can be understood that, the notification to start acquiring at least one stream of sensory signal of the event is pushed on at least one of the devices, which can be Group-I devices and/or Group-II devices. Such that, more devices can be noted about the event, and be triggered to join the event.

In an embodiment of the present invention, wherein the method further comprises: presenting at least an advertisement on the GUI means of each of the at least one device located in the event observing venue within at least a part of the event period and/or at least one device not located in the event observing venue; and preferably, the at least one advertisement is presenting during the step e) presenting the acquired streams of a sensory signal to a user by the at least one device based on the corresponding characterising information of each of the streams of a sensory signal.

More preferably, in the above embodiment of the present invention, the at least one advertisement is presenting when the application installed in the storage of each of the at least one device identifies that an important centre of attention is playing on the GUI means of each of the at least one device.

The present invention also provides an application comprising an instruction which, when the application is executed by a processing means of a device, implements a method as described above.

The present invention further provides a device, wherein the device comprising a storage, a GUI means, and a processing means, wherein an application is stored in the storage, and when the application is executed by the processing means, the application implements the above method.

The present invention provides a system comprising a central unit, a network, and the above devices.

### Brief description of the drawings

Fig. 1 a representation of a device obtaining streams of a sensory signal of an event according to an embodiment of the present invention;
Fig. 2 a representation of devices obtaining streams of a sensory signal of an event having a centre of attention according to an embodiment of the present invention;
Fig. 3 a representation of devices obtaining streams of a sensory signal of an event having more than one centre of attention according to an embodiment of the present invention;
Fig. 4 a representation of obtaining and/or correcting locations of devices obtaining streams of a sensory signal of an event according to an embodiment of the present invention;
Fig. 5 a representation of an embodiment of a system according to an embodiment of the present invention,
Fig. 6 a representation of a display on a GUI means of a device according to an embodiment of the present invention,
Fig. 7 a representation of a display on a GUI means of a device according to an embodiment of the present invention,
Fig. 8 a representation of a display on a GUI means of a device according to an embodiment of the present invention,
Fig. 9 a representation of a possible plan of playing the streams of a sensory signal to present a continuity with respect to time according to an embodiment of the present invention,
Fig. 10 a flowchart of a method according to an embodiment of the present invention,
Fig. 11 a flowchart of a method according to an embodiment of the present invention,
Fig. 12 a flowchart of a method according to an embodiment of the present invention,
Fig. 13 a flowchart of a method according to an embodiment of the present invention.

### Preferred embodiments of the invention

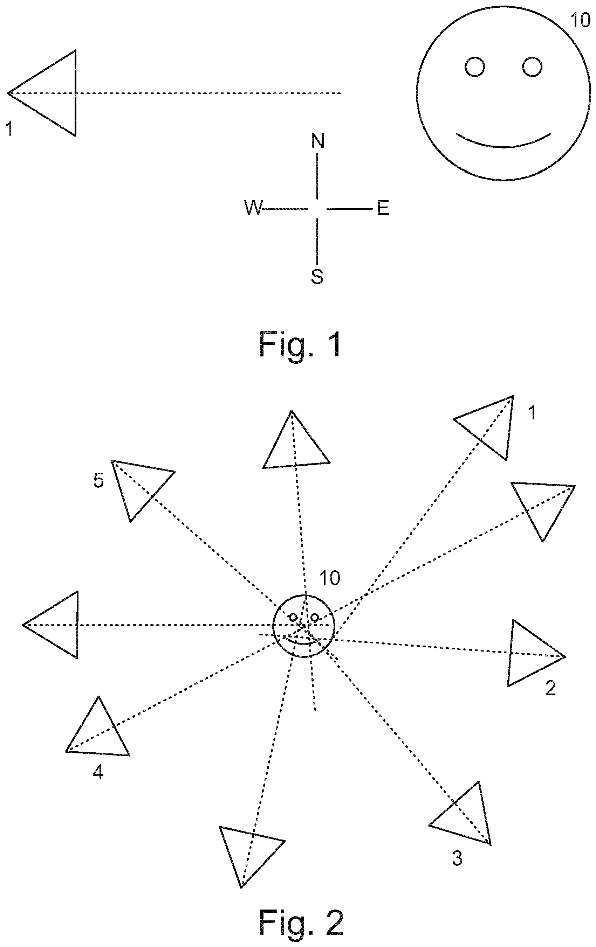

Fig. 1 shows a Group-I device (1) obtaining streams of a sensory signal of an event (10) according to an embodiment of the present invention, as the smiley face in Fig. 1 represents an event (10). An orientation of the device (1) when obtaining a stream of a sensory signal can be defined as left-hand side of the point circle of the event (10); or when cardinal directions are used, the orientation of the device (1) when obtaining a stream of a sensory signal can be defined as due west of the point circle of the event (10).

Fig. 2 shows Group-I devices (1, 2, 3, 4, 5) obtaining streams of a sensory signal of an event (10) according to an embodiment of the present invention, as the smiley face in Fig. 2 represents an event (10). In this case, the devices (1, 2, 3, 4, 5) have different locations and orientations when obtaining streams of a sensory signal of the event (10). It is worth noting that, there can also be devices not obtaining streams of a sensory signal of the event (10), as shown by arrows without a reference number in the Fig. 2.

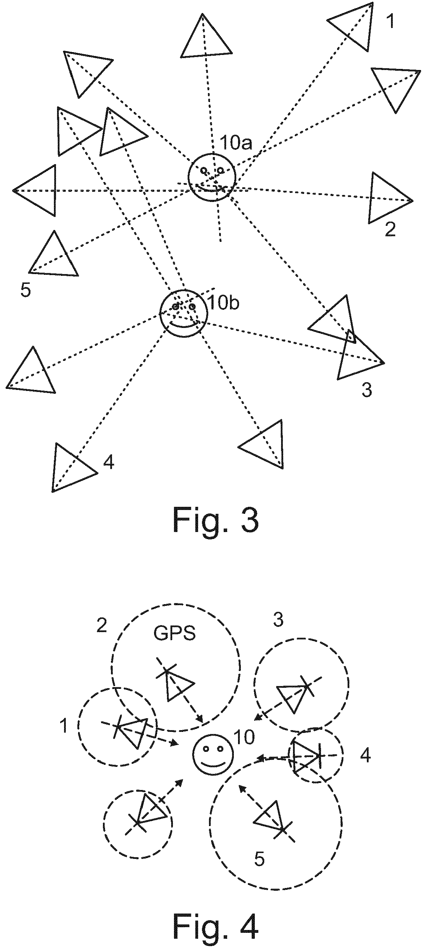

Fig. 3 shows Group-I devices (1, 2, 3, 4, 5) obtaining streams of a sensory signal of an event having two centres of attention (10a, 10b) according to an embodiment of the present invention, as the smiley faces in Fig. 3 represent two centres of attention (10a, 10b) of an event. When more than one centre of attention (10a, 10b) is presented in an event, each of the devices (1, 2, 3, 4, 5) can obtain streams of a sensory signal on a different centre of attention (10a, 10b).

When more than one centre of attention (10a, 10b) is presented in an event, the importance of the centres of attention can be identified, for example, by comparing a number of devices obtaining streams of a sensory signal of each centre of attention (10a, 10b). Exemplary, three devices (1, 2, 5) are obtaining streams of a sensory signal of the upper centre of attention (10a), while two devices (3, 4) are obtaining streams of a sensory signal of the lower centre of attention (10b). It can then be identified that the upper centre of attention (10a) is more important than the lower centre of attention, at least during the time period when the devices (1, 2, 3, 4, 5) are obtaining streams of a sensory signal as shown in Fig. 3.

Fig. 4 is a representation of obtaining and/or correcting locations of Group-I devices when obtaining streams of a sensory signal of an event according to an embodiment of the present invention. As shown by circles around the devices (1, 2, 3, 4, 5), a range of capacity of sensor(s), such as a GPS sensor, in each of the devices (1, 2, 3, 4, 5) for obtaining the locations of the devices (1, 2, 3, 4, 5) can vary, e.g., according to the brand and model of the devices (1, 2, 3, 4, 5). The ranges of capacity of different devices (1, 2, 3, 4, 5) can intersect with each other. For example, the three devices (3, 4, 5) to the right of Fig. 4 have intersecting ranges of capacity, and these three devices (3, 4, 5) can correct each other's location by commuting their GPS data to one another by an application installed in a storage of each of the three devices (3, 4, 5).

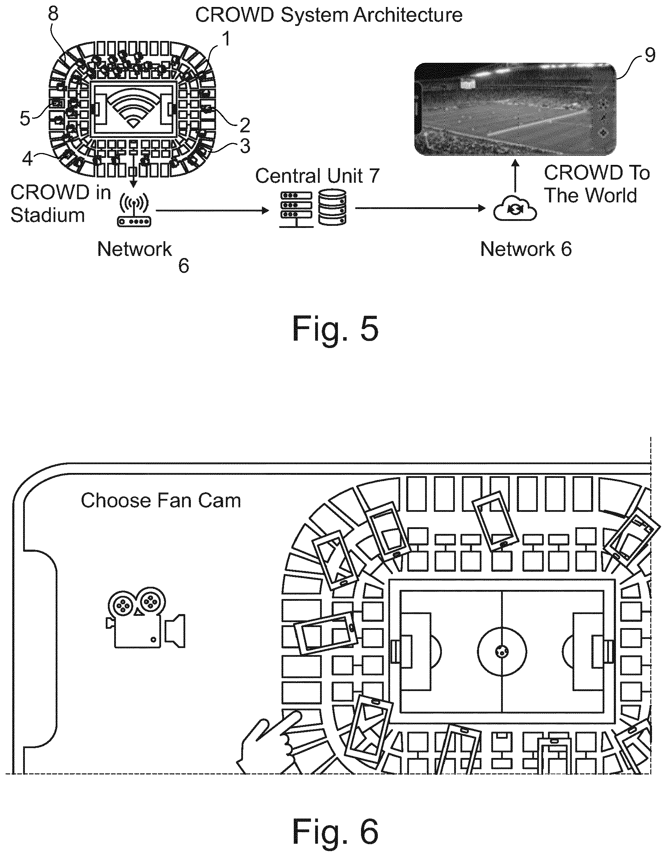

Fig. 5 shows an embodiment of a system according to an embodiment of the present invention. In the system, there are devices (1, 2, 3, 4, 5) in an event observing venue (8) within at least a part of an event period, and at least one device (9) not in the event observing venue (8) within at least a part of the event period. Each of the devices (1, 2, 3, 4, 5) in the event observing venue (8) within at least a part of the event period obtains at least one stream of a sensory signal of the event. Each of the corresponding devices (1, 2, 3, 4, 5) that obtained each of the streams of a sensory signal acquires characterising information of each of the streams of a sensory signal, wherein the characterising information comprising a location and an orientation of the corresponding device (1, 2, 3, 4, 5) when obtaining each of the streams of a sensory signal, a starting timestamp and an ending timestamp of each of the streams of a sensory signal. The streams of a sensory signal and the characterising information are then uploaded and stored to a central unit (7) through a network (6), and the at least one device (9) not in the event observing venue (8) within at least a part of the event period can acquire the streams of a sensory signal and the characterising information from the central unit through the network (6), and acquire abundant information about the event.

It is worth noting that, devices (1, 2, 3, 4, 5) in an event observing venue (8) within at least a part of an event period can also acquire the streams of a sensory signal and the characterising information from the central unit (7) through the network (6).

Fig. 6 is a representation of a display (e.g., a format and sequence of showing the acquired streams of a sensory signal) on a GUI means of at least one device (1, 2, 3, 4, 5, 9) according to an embodiment of the present invention, when the at least one device (1, 2, 3, 4, 5, 9) acquires streams of a sensory signal and characterising information from the central unit (7) through the network (6). Here, the display is generated according to the locations and orientations of each of the corresponding devices when obtaining each of the streams of a sensory signal. A scheme of an event observing venue (8) which is a football pitch in this example is reconstructed by the application installed in the storage of the at least one device (1, 2, 3, 4, 5, 9), and the streams of a sensory signal are shown as icons with a shape as a mobile phone according to the locations and orientations of each of the corresponding devices when obtaining each of the streams of a sensory signal. This visualised display allows a user of the at least one device (1, 2, 3, 4, 5, 9) to quickly spot where each of the streams of a sensory signal was obtained, and therefore to locate on at least one stream of a sensory signal that the user is interested in.

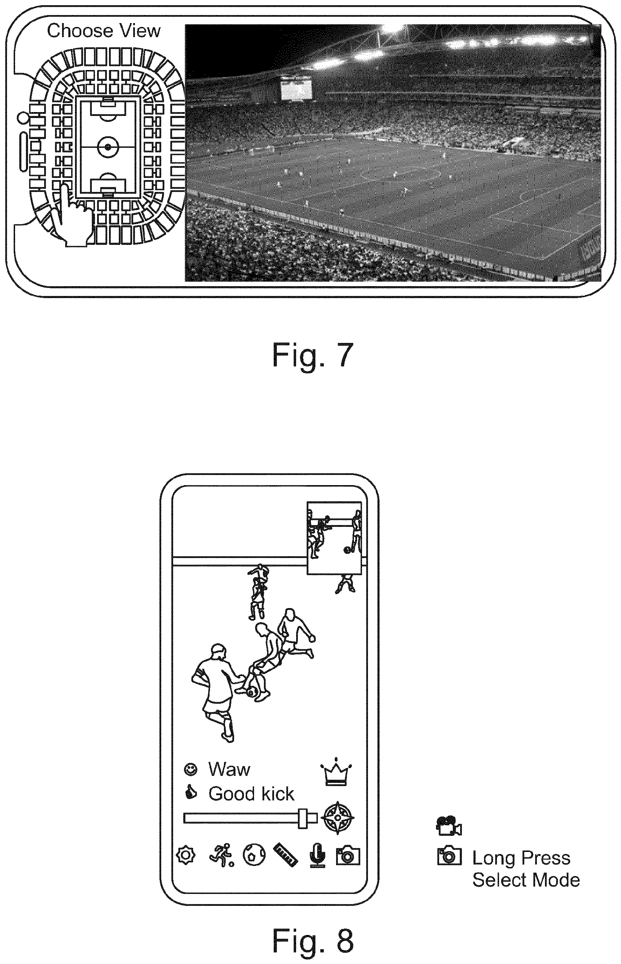

Fig. 7 is a representation of a display on the GUI means of at least one device (1, 2, 3, 4, 5, 9) according to an embodiment of the present invention, when the at least one device (1, 2, 3, 4, 5, 9) acquires the streams of a sensory signal and the characterising information from the central unit (7) through the network (6). On the left side of the GUI means of the at least one device (1, 2, 3, 4, 5, 9), a display comprising a scheme of an event observing venue (8) which is a football pitch in this example is shown with regions according to seat numbers for the spectators. The user of the at least one device (1, 2, 3, 4, 5, 9) can select at least one streams of a sensory signal by selecting the preferable region on the scheme of the event observing venue. It is worth noting that, as shown in Fig. 7, the GUI means of the at least one device (1, 2, 3, 4, 5, 9) can also show streams of a sensory signal with an orientation from the region selected by the user, while at the same time still shows the scheme of the event observing venue.

Fig. 8 is a representation of a display on the GUI means of at least one device (1, 2, 3, 4, 5, 9) according to an embodiment of the present invention, when the acquired streams of a sensory signal is to be presented to the user by the at least one device (1, 2, 3, 4, 5, 9). The user of the at least one device (1, 2, 3, 4, 5, 9) is provided with multiple icons for adjusting a plan of playing the streams of a sensory signal.

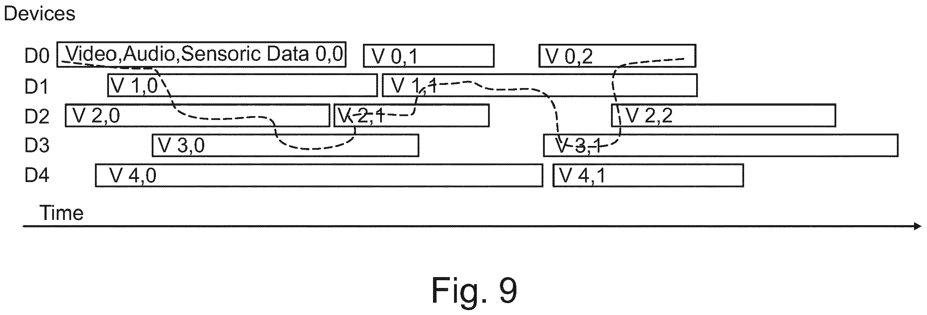

Fig. 9 is a representation of a possible plan of playing the streams of a sensory signal to present a continuity with respect to time according to an embodiment of the present invention. According to the starting timestamps and ending timestamps of each of the streams of a sensory signal, it is possible to generate a plan of playing the streams of a sensory signal that has continuity with respect to time. Namely, the plan of playing the streams of a sensory signal does not miss any second of the event.

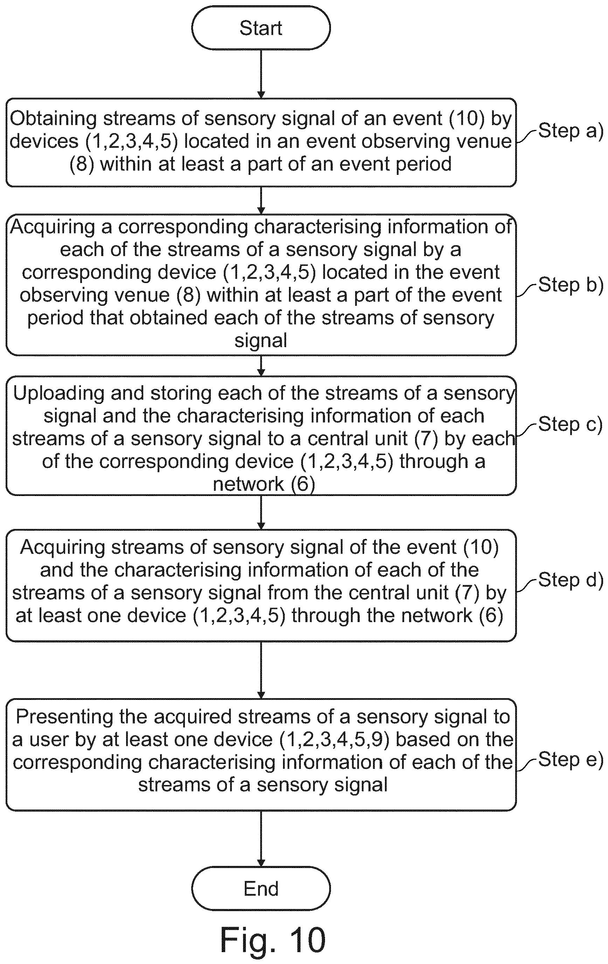

Fig. 10 is a flowchart of a method according to an embodiment of the present invention. In this embodiment of the present invention, the method comprises the following steps: a) obtaining streams of a sensory signal of an event (10) by devices (1, 2, 3, 4, 5) located in an event observing venue (8) within at least a part of an event period; b) acquiring a corresponding characterising information of each of the streams of a sensory signal by a corresponding device (1, 2, 3, 4, 5) located in the event observing venue (8) within at least a part of the event period that obtained each of the streams of a sensory signal; c) uploading and storing each of the streams of a sensory signal and the characterising information of each of the streams of a sensory signal to a central unit (7) by each of the corresponding device (1, 2, 3, 4, 5) through a network (6); d) acquiring streams of a sensory signal of the event (10) and the characterising information of each of the streams of a sensory signal from the central unit (7) by at least one device (1, 2, 3, 4, 5, 9) through the network (6); and e) presenting the acquired streams of a sensory signal to a user by the at least one device (1, 2, 3, 4, 5, 9) based on the corresponding characterising information of each of the streams of a sensory signal.

In the method according to the above embodiment of the present invention, the characterising information comprising at least one of the following: a location of the corresponding device when obtaining each of the streams of a sensory signal, an orientation of the corresponding device when obtaining each of the streams of a sensory signal, a starting timestamp of each of the streams of a sensory signal, and an ending timestamp of each of the streams of a sensory signal. And the devices (1, 2, 3, 4, 5, 9) are synchronized.

In the method according to the above embodiment of the present invention, the at least one device (1, 2, 3, 4, 5, 9) in steps d) and e) being a device (1, 2, 3, 4, 5) located in the event observing venue (8) within at least a part of the event period and/or a device (9) not located in the event observing venue (8).

In the method according to the above embodiment of the present invention, the devices (1, 2, 3, 4, 5) located in the event observing venue (8) within at least a part of the event period and the devices (9) not located in the event observing venue (8) are synchronized.

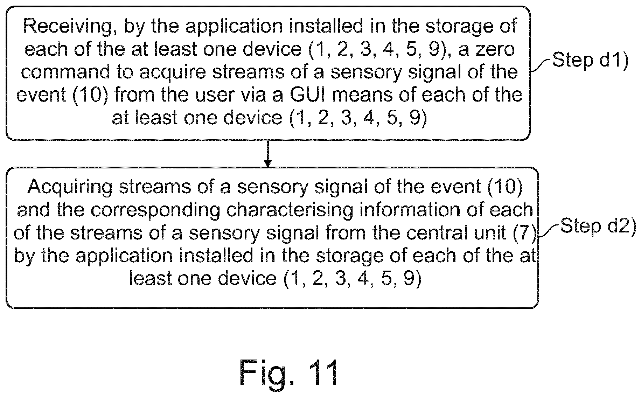

Fig. 11 is a flowchart of a method according to an embodiment of the present invention. In this embodiment of the present invention, the step d) acquiring streams of a sensory signal of the event (10) and the characterising information of each of the streams of a sensory signal from the central unit (7) by at least one device (1, 2, 3, 4, 5, 9) through the network (6) comprises the following steps: step d1) receiving, by the application installed in the storage of each of the at least one device (1, 2, 3, 4, 5, 9), a zero command to acquire streams of a sensory signal of the event (10) from the user via a GUI means of each of the at least one device (1, 2, 3, 4, 5, 9); and step d2) acquiring streams of a sensory signal of the event (10) and the corresponding characterising information of each of the streams of a sensory signal from the central unit (7) by the application installed in the storage of each of the at least one device (1, 2, 3, 4, 5, 9).

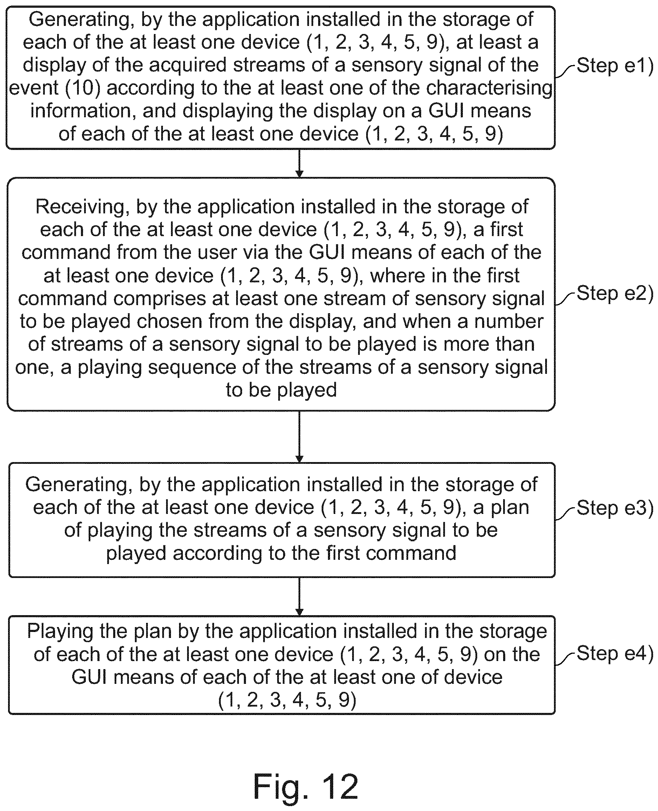

Fig. 12 is a flowchart of a method according to an embodiment of the present invention. In this embodiment of the present invention, the step e) presenting the acquired streams of a sensory signal to a user by the at least one device (1, 2, 3, 4, 5, 9) based on the corresponding characterising information of each of the streams of a sensory signal comprises the following steps: step e1) generating, by the application installed in the storage of each of the at least one device (1, 2, 3, 4, 5, 9), at least a display of the acquired streams of a sensory signal of the event (10) according to the at least one of the characterising information, and displaying the display on the GUI means of each of the at least one device (1, 2, 3, 4, 5, 9); step e2) receiving, by the application installed in the storage of each of the at least one device (1, 2, 3, 4, 5, 9), a first command from the user via the GUI means of each of the at least one device (9), wherein the first command comprises at least one stream of sensory signal to be played chosen from the display, and when a number of streams of a sensory signal to be played is more than one, a displaying sequence of the streams of a sensory signal to be played; step e3) generating, by the application installed in the storage of each of the at least one device (1, 2, 3, 4, 5, 9), a plan of playing the streams of a sensory signal to be played according to the first command; and step e4) playing the plan by the application installed in the storage of each of the at least one device (1, 2, 3, 4, 5, 9) on the GUI means of each of the at least one of device (1, 2, 3, 4, 5, 9).

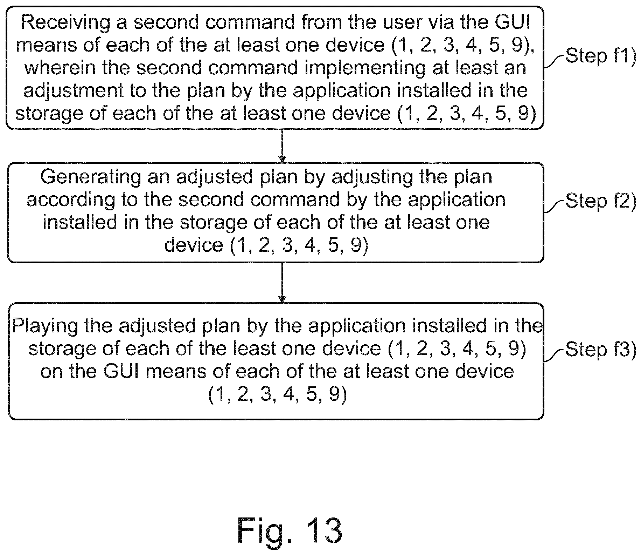

Fig. 13 is a flowchart of a method according to an embodiment of the present invention. In this embodiment of the present invention, the method further comprises the following steps: step f1) receiving a second command from the user via the GUI means of each of the at least one device (1, 2, 3, 4, 5, 9), wherein the second command implementing at least an adjustment to the plan by the application installed in the storage of each of the at least one device (1, 2, 3, 4, 5, 9); step f2) generating an adjusted plan by adjusting the plan according to the second command by the application installed in the storage of each of the at least one device (1, 2, 3, 4, 5, 9); and step f3) playing the adjusted plan by the application installed in the storage of each of the at least one device (1, 2, 3, 4, 5, 9) on the GUI means of each of the at least one device (1, 2, 3, 4, 5, 9).

### List of references

- 1-5: device located in the event observing venue within at least a part of the event period
- 6: network
- 7: central unit
- 8: event observing venue
- 9: device not located in the event observing venue
- 10: event
- 10a, 10b: centre of attention

## Claims

1. A method for processing and presenting streams of a sensory signal, wherein the method comprising the following steps:
a) obtaining streams of a sensory signal of an event (10) by devices (1, 2, 3, 4, 5) located in an event observing venue (8) within at least a part of an event period;
b) acquiring a corresponding characterising information of each of the streams of a sensory signal by a corresponding device (1, 2, 3, 4, 5) located in the event observing venue (8) within at least a part of the event period that obtained each of the streams of a sensory signal,
wherein the characterising information comprising at least one of the following:
- a location of the corresponding device (1, 2, 3, 4, 5) when obtaining each of the streams of a sensory signal,
- an orientation of the corresponding device (1, 2, 3, 4, 5) when obtaining each of the streams of a sensory signal,
- a starting timestamp of each of the streams of a sensory signal, and
- an ending timestamp of each of the streams of a sensory signal;
c) uploading and storing each of the streams of a sensory signal and the characterising information of each of the streams of a sensory signal to a central unit (7) by each of the corresponding device (1, 2, 3, 4, 5) through a network (6);
d) acquiring streams of a sensory signal of the event (10) and the characterising information of each of the streams of a sensory signal from the central unit (7) by at least one device (1, 2, 3, 4, 5, 9) through the network (6); and
e) presenting the acquired streams of a sensory signal to a user by the at least one device (1, 2, 3, 4, 5, 9) based on the corresponding characterising information of each of the streams of a sensory signal;
wherein the at least one device (1, 2, 3, 4, 5, 9) in steps d) and e) being a device (1, 2, 3, 4, 5) located in the event observing venue (8) within at least a part of the event period and/or a device (9) not located in the event observing venue (8); and
wherein the devices (1, 2, 3, 4, 5) located in the event observing venue (8) within at least a part of the event period and the devices (9) not located in the event observing venue (8) are synchronized.

2. The method according to claim 1, wherein after the step b) acquiring a corresponding characterising information of each of the streams of a sensory signal by a corresponding device (1, 2, 3, 4, 5) located in the event observing venue (8) within at least a part of the event period that obtained each of the streams of a sensory signal, the method further comprises the following step(s):
pushing a notification to start obtaining at least one stream of a sensory signal of the event (10) on at least one device (1, 2, 3, 4, 5) located in the event observing venue (8) within at least a part of the event period by an application installed in a storage of the at least one device (1, 2, 3, 4, 5) located in the event observing venue (8) within at least a part of the event period through the network (6), wherein the at least one device (1, 2, 3, 4, 5) located in the event observing venue (8) within at least a part of the event period has not yet started to obtain at least one stream of a sensory signal of the event (10); and/or
pushing a notification to travel to the event observing venue (8) on at least one device (9) not located in the event observing venue (8) by the application installed in the storage of the at least one device (9) not located in the event observing venue (8) through the network (6).

3. The method according to claim 1 or 2, wherein the step c) uploading and storing each of the streams of a sensory signal and the characterising information of each of the streams of a sensory signal to a central unit (7) by each of the corresponding device (1, 2, 3, 4, 5) through a network (6) comprises the following steps:
analysing each of the streams of a sensory signal by the central unit (7),
recognising a common parameter between at least two of the streams of a sensory signal by the central unit (7), and
correcting at least one of the characterising information of one of the at least two of the streams of a sensory signal by the central unit (7).

4. The method according to any one of claims 1 to 3, wherein the step e) presenting the acquired streams of a sensory signal to a user by the at least one device (1, 2, 3, 4, 5, 9) based on the corresponding characterising information of each of the streams of a sensory signal comprises the following steps:
e1) generating, by the application installed in the storage of each of the at least one device (1, 2, 3, 4, 5, 9), at least a display of the acquired streams of a sensory signal of the event (10) according to the at least one of the characterising information,
and displaying the display on a GUI means of each of the at least one device (1, 2, 3, 4, 5, 9);
e2) receiving, by the application installed in the storage of each of the at least one device (1, 2, 3, 4, 5, 9), a first command from the user via the GUI means of each of the at least one device (1, 2, 3, 4, 5, 9), wherein the first command comprises at least one stream of sensory signal to be played chosen from the display, and when a number of streams of a sensory signal to be played is more than one, a playing sequence of the streams of a sensory signal to be played;
e3) generating, by the application installed in the storage of each of the at least one device (1, 2, 3, 4, 5, 9), a plan of playing the streams of a sensory signal to be played according to the first command; and
e4) playing the plan by the application installed in the storage of each of the at least one device (1, 2, 3, 4, 5, 9) on the GUI means of each of the at least one of device (1, 2, 3, 4, 5, 9).

5. The method according to any one of claims 1 to 4, wherein the step e) presenting the acquired streams of a sensory signal to a user by the at least one device (1, 2, 3, 4, 5, 9) based on the corresponding characterising information of each of the streams of a sensory signal comprises the following step:
automatically choosing, by the application installed in the storage of each of the at least one device (1, 2, 3, 4, 5, 9), at least one stream of a sensory signal to be played from the acquired streams of a sensory signal; automatically generating, by the application installed in the storage of each of the at least one device (1, 2, 3, 4, 5, 9), a plan of playing the at least one stream of a sensory signal to be played; and
automatically playing, by the application installed in the storage of each of the at least one device (1, 2, 3, 4, 5, 9), the plan on a GUI means of each of the at least one device (1, 2, 3, 4, 5, 9).

6. The method according to claim 4 or 5, wherein the method further comprises the following steps:
f1) receiving a second command from the user via the GUI means of each of the at least one device (1, 2, 3, 4, 5, 9), wherein the second command implementing at least an adjustment to the plan by the application installed in the storage of each of the at least one device (1, 2, 3, 4, 5, 9);
f2) generating an adjusted plan by adjusting the plan according to the second command by the application installed in the storage of each of the at least one device (1, 2, 3, 4, 5, 9); and
f3) playing the adjusted plan by the application installed in the storage of each of the at least one device (1, 2, 3, 4, 5, 9) on the GUI means of each of the at least one device (1, 2, 3, 4, 5, 9).

7. The method according to claim 6, wherein when the second command is received during the step e4) playing the plan by the application installed in the storage of each of the at least one device (1, 2, 3, 4, 5, 9) on the GUI means of each of the at least one device (1, 2, 3, 4, 5, 9),
the plan is continued to be played on the GUI means of each of the at least one device (1, 2, 3, 4, 5, 9) by the application installed in the storage of each of the at least one device (1, 2, 3, 4, 5, 9) until the step f2) is finished and the adjusted plan is generated.

8. The method according to any one of claims 4 to 7, wherein the method further comprises:
uploading and storing the plan to the central unit (7) by the at least one device (1, 2, 3, 4, 5, 9) through the network (6) for devices to acquire; or
sending the plan to another device by the at least one device (1, 2, 3, 4, 5, 9) through the network (6).

9. The method according to any one of claims 4 to 8, wherein in the step e1) generating, by the application installed in the storage of each of the at least one device (1, 2, 3, 4, 5, 9), at least a display of the acquired streams of a sensory signal of the event (10) according to the at least one of the characterising information, and displaying the display on the GUI means of each of the at least one device (1, 2, 3, 4, 5, 9),
when the display of the acquired streams of a sensory signal of the event (10) is generated according to at least the locations of the corresponding devices (1, 2, 3, 4, 5) when obtaining each of the stream of a sensory signal, the display comprises a scheme of the event observing venue (8), and a visual representation of at least one of the locations of the corresponding devices (1, 2, 3, 4, 5) when obtaining each of the streams of a sensory signal on the scheme of the event observing venue (8).

10. The method according to any one of the preceding claims, wherein the method further comprises the following steps:
receiving a third command from a user of a device (1, 2, 3, 4, 5) located in the event observing venue (8) within at least a part of the event period via a GUI means of the device (1, 2, 3, 4, 5) located in the event observing venue (8) within at least a part of the event period; and
transferring, by the application installed in a storage of the device (1, 2, 3, 4, 5) located in the event observing venue (8) within at least a part of the event period, a right of a location in the event observing venue (8) from the device (1, 2, 3, 4, 5) in the event observing venue (8) within at least a part of the event period to another device (1, 2, 3, 4, 5) in the event observing venue (8) within at least a part of the event period.

11. The method according to any one of the preceding claims, wherein the method further comprises the following step:
pushing a notification to start acquiring at least one stream of sensory signal of the event (10) on at least one device (1, 2, 3, 4, 5) located in the event observing venue (8) within at least a part of the event period and/or at least one device (9) not located in the event observing venue (8) through the network (6).

12. The method according to any one of the preceding claims, wherein the method further comprises the following step:
presenting at least an advertisement on the GUI means of each of the at least one device (1, 2, 3, 4, 5) located in the event observing venue (8) within at least a part of the event period and/or at least one device (9) not located in the event observing venue (8); and preferably, the at least one advertisement is presenting during the step e) presenting the acquired streams of a sensory signal to a user by the at least one device (1, 2, 3, 4, 5, 9) based on the corresponding characterising information of each of the streams of a sensory signal.

13. An application comprising an instruction which, when the application is executed by a processing means of a device (1, 2, 3, 4, 5, 9), implements a method according to any one of claims 1 to 12.

14. A device (1, 2, 3, 4, 5, 9), wherein the device (1, 2, 3, 4, 5, 9) comprising a storage, a GUI means, and a processing means, wherein an application is stored in the storage, and when the application is executed by the processing means, the application implements a method according to any one of claims 1 to 13.

15. A system comprising a central unit (7), a network (6), and devices (1, 2, 3, 4, 5, 9) according to claim 14.
